# EUROPEAN PATENT SPECIFICATION

(11) **EP 1 934 879 B1**
(45) Date of publication and mention of the grant of the patent: **13.05.2015**
(21) Application number: 06814654.7
(22) Date of filing: 13.09.2006
(51) Int. Cl.: G06F 21/57, G06F 21/79, G06F 9/445

(54) **SECURE YET FLEXIBLE SYSTEM ARCHITECTURE FOR SECURE DEVICES WITH FLASH MASS STORAGE MEMORY**
SICHERE UND DENNOCH FLEXIBLE SYSTEMARCHITEKTUR FÜR SICHERE EINRICHTUNGEN MIT FLASH-MASSENSPEICHER-SPEICHER
ARCHITECTURE DE SYSTEME FLEXIBLE, TOUTEFOIS, SECURISEE POUR DISPOSITIFS SECURISES AVEC MEMOIRE DE STOCKAGE DE MASSE FLASH

(30) Priority: 14.09.2005 US 717164 P; 22.12.2005 US 317341; 22.12.2005 US 317339
(43) Date of publication of application: 25.06.2008
(73) Proprietor: SanDisk Technologies Inc., Plano, Texas 75024 (US); Discretix Technologies Ltd., 42502 Netanya (IL)
(72) Inventor: HOLTZMAN, Michael, Cupertino, California 95014 (US); BAR-EL, Hagai, 76657 Rehovot (IL); GREENSPAN, Ronen, Kiryat Yam (IL); SHAPIRO, Rony, Tel Aviv (IL)
(74) Representative: Hitchcock, Esmond Antony
(86) International application number: PCT/US2006/035839
(87) International publication number: WO 2007/033321

(56) References cited:
- EP-A- 1 273 996
- EP-A- 1 351 151
- EP-A- 1 429 224
- WO-A-02/103495
- WO-A-2004/040586
- WO-A-2005/013125
- US-A- 5 606 660
- US-A1- 2003 156 473
- US-A1- 2005 114 620
- US-B1- 6 629 192

## Description

### FIELD OF THE INVENTION

The present application is generally related to the operation of flash based mass storage devices, and in particular those with copy protection of secure content.

### BACKGROUND OF THE INVENTION

Flash based mass storage devices are used to store very large amounts of content, such as pictures and music or software programs. Examples of these mass storage devices include memory cards, universal serial bus ("USB") flash drives, flash based music and/or video players, and other portable computing devices that rely on flash for the mass storage of content or files.

User files are frequently updated and modified.. This is particularly the case when dealing with photos, music, and documents. Flash memory has a limited number of read/write cycles, and a great deal of research and development has gone into distributing the cycles among the flash memory cells in order to maximize the lifespan and reliability of the devices. For instance, wear leveling techniques such as those taught in U.S. Patent No. 6,230,233 entitled "Wear Leveling Techniques For Flash EEPROM Systems" to Lofgren et al., U.S. Patent No. 5,268,870 entitled "Flash EEPROM System and Intelligent Programming and Erasing Methods Therefore" to Harari, PCT Publication No. WO2004040578A2 entitled "Wear Leveling In Non-Volatile Storage Systems" to Chang et al., and U.S. Patent Publication No. 20040083335A1, entitled "Automated Wear Leveling In Non-Volatile Storage Systems" to Gonzalez et al., are commonly implemented in these devices. These techniques generally involve changing the logical/physical mapping so that physical locations of the memory are used roughly the same amount.

In addition, as the usage of flash based mass storage devices is proliferating, the number of different things that can be done with them is also increasing.

Therefore, there exists a need for a new device operating system architecture that provides flexibility to store and run a wide range of firmware that can be updated and changed to accommodate the range of increasing functionality. In addition to being flexible, this architecture must provide a highly secure and reliable environment for both firmware and content. As is always the case, all of this should be done for the lowest possible cost, using standard components whenever possible.

EP 6 629 192 discloses a device in which a firmware boot block and code representing a non-volatile storage manager are stored in flash memory and loaded therefrom for execution.

EP 1 273 996 discloses a device in which a boot process is started by reading code from ROM.

According to the present invention there is provided a method of operating a mass storage device. The method comprises providing a non-secure flash memory for the mass storage of content and software and providing a secure controller that manages operations of the device and comprises a hardware based cryptographic engine for encrypting and/or decrypting data as it passes through the secure controller. Firmware signed with a secret key is stored in the secure controller or one or more keys derived from a secret key stored in the secure controller is stored within the flash memory. The firmware comprises a first level stored in a physical access partition of the flash memory and a second level stored in a logical access partition of the flash memory. The first level of firmware comprises boot loader firmware. The firmware is executed from RAM, wherein the size of the firmware is larger than the size of the RAM. The second level of firmware is divided into a plurality of overlays, each overlay comprising a different portion of the second level of firmware. Each of the plurality of overlays of the second level of firmware is signed with a different key. The method further comprises reading the firmware stored in the flash memory and, prior to execution of the first and second levels of the firmware, verifying the signatures of the respective first and second levels of the firmware using the cryptographic engine as the firmware is read from the flash memory and passes through the encryption engine. Verifying the one or more signatures comprises the secure controller generating a signature for the firmware read from the flash memory and comparing the generated signature with the signature stored in the flash memory.

According to another aspect of the present invention there is provided a secure system comprising a non-secure flash mass storage memory, a secure controller operable to read firmware stored in the non-secure mass storage memory, the secure controller comprising a hardware based cryptographic engine for encrypting and/or decrypting data as it passes through the secure controller. The firmware is signed with a secret key stored in the secure controller or one or more keys derived from a secret key stored in the secure controller. The firmware comprises a first level stored in a physical access partition of the flash memory and a second level stored in a logical access partition of the flash memory. The first level of firmware comprises boot loader firmware. The firmware is executed from RAM, wherein the size of the firmware is larger than the size of the RAM. The second level of firmware is divided into a plurality of overlays, each overlay comprising a different portion of the second level of firmware, wherein each of the plurality of overlays of the second level of firmware is signed with a different key. The controller is operable to, prior to execution of the first and second levels of the firmware, verify authenticity of the first and second levels of the firmware as they are read from the non-secure mass storage memory by generating a signature for the respective first and second levels of the firmware read from the non-secure mass storage memory using the cryptographic engine as the firmware passes through the encryption engine and comparing the generated signature with the signature stored in the non-secure mass storage memory.

The present invention allows a device to be both secure in operation and flexible in terms of functionality. This means functionality can be tailored to users' desires and added over time all the while maintaining a high level of security. Therefore the device can be used to store confidential and limited access .information such as transactional data and copyrighted artistic works.

The present invention also allows for the device to boot quickly and reliably while still providing for reliable long term data storage through the use of wear leveling techniques where appropriate.

Firmware that is not authentic, and that may potentially compromise the security of the device will not be executed. An indication of the authenticity is verified before execution. In a preferred embodiment, multiple different levels of such indications are provided and are associated with the particular controller of the device that created the indications. In this preferred embodiment, one or more of the different levels of indications can be verified. Without the properly associated indication the firmware will not be executed.

This security is achieved despite the fact that the device utilizes readily available memory without built in security for the mass storage of the data, including the firmware.

### BRIEF DESCRIPTION OF THE DRAWINGS

FIG. 1A is a schematic diagram of secure device 100A.
FIG. 1B is a schematic diagram of secure device 100B, an embodiment of the present invention.
FIG. 2 is a diagram illustrating various pieces of firmware in a portion of memory space 108.
FIG. 3 is a schematic diagram illustrating software structure and hardware access according an embodiment of the present invention.
FIG. 4 is a flowchart illustrating some steps of firmware integrity verification.
FIG. 5 is a flowchart of operation of an embodiment of the present invention.
FIG. 6 is a flowchart illustrating integrity checking of physically stored data such as the firmware 200.
FIG. 7 is a flowchart illustrating integrity checking of logically stored data such as user files and the application firmware 202A, B,...X.

### DETAILED DESCRIPTION OF THE PREFERRED EMBODIMENTS

Devices incorporating flash memory for mass storage purposes must store large amounts of content that is written and read relatively often. For instance, digital photo and music libraries are regularly updated by users of such devices. With the increase of protected content and the desire to protect content generally, such devices must also provide robust security to prevent unauthorized copying of such "secure" or protected content. At the same time, security should not come at the cost of flexibility. The present invention provides for a device that allows functionality to be added over time, while maintaining a high level of security. This flexibility is essential in a world where devices are expected to provide ever increasing functionality.

A secure device is one that protects the contents of the device from unauthorized copying or alteration. Secure content includes any content or data that it is desirable to safeguard from unauthorized copying or tampering. In addition to billing, transaction and other traditionally confidential personal information, artistic content must also be secured from access and copying by those other than the owner or other authorized persons.

Depending on the architecture of the device, a hacker may try to gain access to the content via data buses, or by directly accessing the mass storage memory. In some prior devices, directly accessing the memory storage unit was difficult as the memory storage unit was often protected by placing it an environment that was logistically hard to access. For instance, Smart Cards utilized programmable read only memories (PROMS) that incorporated a small amount of non volatile memory that was made secure in part by physically isolating it from access.

However, it is desirable to utilize unsecure mass storage memory, that is, among other things, more standardized, readily available, and/or economical. An unsecure memory or storage unit is one where authorization is not required in order to gain (read/write) access to the (encrypted or unencrypted) data stored therein, or one where there are no built in protection mechanisms that prevent copying of the stored data. While this memory may be packaged in a multi functional package with other non-memory components such as a processor, it is commonly in the form of a dedicated memory package with one or more memory chips.

Typically, a device or system incorporating mass storage flash memory utilizes a processor to control the data storage and retrieval operations of the memory. Such a processor is part of a controller and is often referred to as a controller. A controller executes software instructions to control the device. The software that runs and controls the hardware of a device is often referred to as firmware. The firmware is typically executed from random access memory (RAM) after having been copied from some other memory where it is normally stored. Shadowing or copying to RAM is advantageous because although flash is easily updated it is slower and not inherently executable because it does not have random access capability, and because read only memory is not easily updated.

In the case where some amount of security is to be provided in the firmware, there must be some mechanism to prevent execution of the other than the proper firmware that has the requisite security mechanisms. This is especially true when the firmware is stored in an unsecure memory. As mentioned above, it is the firmware that controls the operation of the device, and therefore it is not a simple matter to have the firmware essentially protect itself. Nor is it a simple matter to protect execution of compromised or unauthentic firmware when such firmware is stored in an otherwise unsecure memory package.

The present invention provides for a secure system with mass storage capability even though it uses unsecure memory for the mass storage unit. Furthermore, it creates a secure system where the firmware for running the secure system is stored in the unsecure memory. In order to be able to store the firmware in the unsecure mass storage memory, the present invention employs a system that prevents execution of inauthentic firmware.

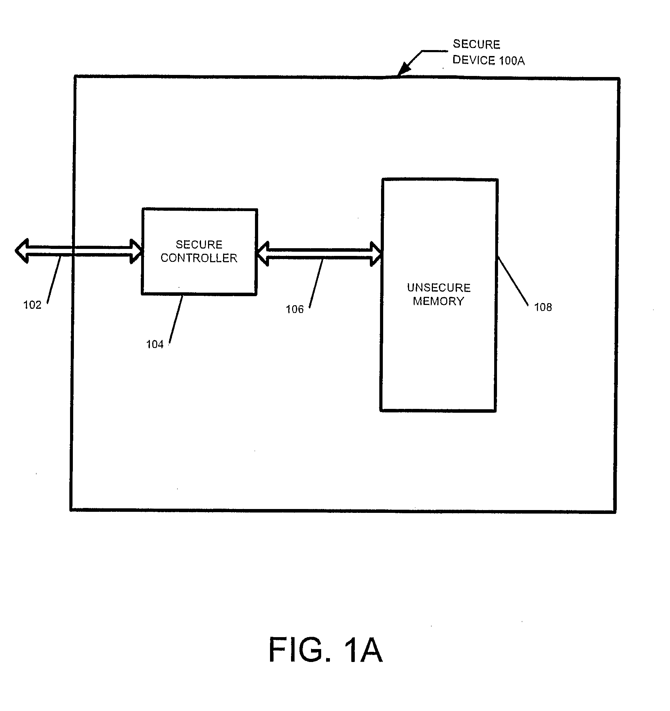

Reference will now be made to preferred embodiments depicted in the figures. FIG. 1A illustrates secure device ("SD") 100A.

SD 100A comprises a secure controller 104 and unsecure memory 108.

Memory 108 is flash type memory and is used for mass storage purposes. This means that the memory is used for general purpose storage of user files, such as audio, video, and picture files, among other things. It is a principal memory storage unit of device 108 and can be used to store any type of file a user wishes to store in it. It is designed to allow a user to frequently update and access his library of files. A mass storage memory is generally larger than other random access memory ("RAM") and read only memory ("ROM") that SD 100A may also comprise (not shown) in this and other embodiments. Also, as a general file storage device, a mass storage memory is distinct from code storage devices that are designed to store comparatively small amounts of operating code that are infrequently updated. A ROM or flash memory may be used as a code storage device, but it should be understood that a code storage device is different in purpose and generally in size than a mass storage device.

SD 100A also comprises a data or memory bus 106 and a host bus 102. SD 100A may be a complete electronic device such as a digital camera or music player, cellular telephone etc. It may also have the form factor of a memory card or universal serial bus ("USB") drive designed to be used in conjunction with any type of processor controlled electronic device. For simplicity in describing SD100A and the other embodiments depicted in the figures, the embodiments may often be referred to as a memory card, but it should be understood that such reference is to a preferred embodiment and should not limit the scope of the present invention which is defined by the appended claims. Currently, the preferred form factor for a memory card in which the present invention is especially useful is the well known Secure Digital ("SD") Card.

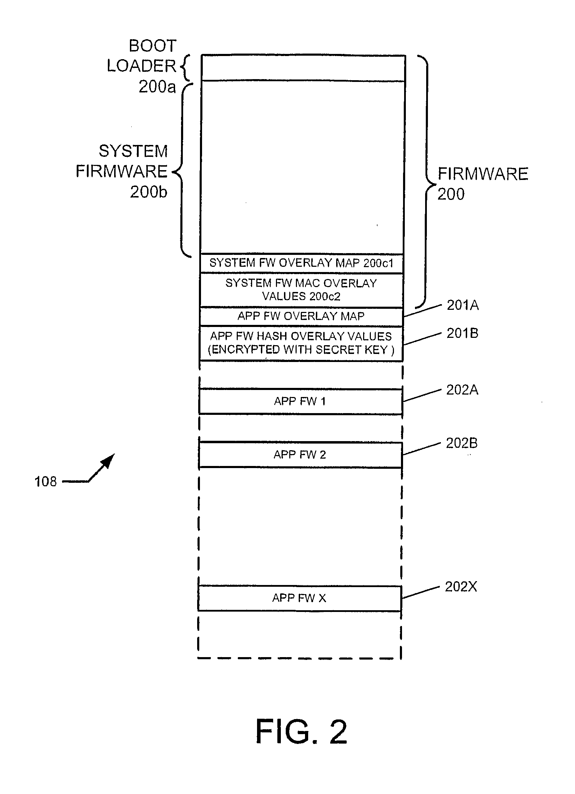

Data and commands are communicated to and from SD100A via host bus 102. The host, which is not shown, may be a personal computer or other electronic device. Secure controller 104 controls the read and write operations to and from unsecure memory 108 via memory bus 106. In doing so, it also limits access to the contents of the unsecure memory 108. As mentioned above, the firmware that runs the device is stored in unsecure memory 108. This firmware, which will be described in more detail later with regard to FIGS. 2-7, in conjunction with controller 104, provides the security that makes device 100A a secure device. Therefore, it is essential that the firmware that is executed by secure controller 104 is authentic, or the security of the system could be compromised.

Ensuring the authenticity of the firmware is much more difficult when it is in an unsecure memory. However, given that the unsecure memory 108 is used for mass storage purposes, it is quite large and is easily updated. Therefore, it makes sense to use the capacity of the unsecure memory to store the firmware. This may eliminate or a least reduce the size of a code storage device dedicated to storing the firmware. Alternatively it reduces the need for such storage within the controller. This cost saving is important in a competitive market. There are 3 main paths to the contents of the information in the unsecure memory 108 or on buses 102 and 106 may be in an encrypted format, there is always the danger that the encryption key(s) could be compromised. If the firmware were to be compromised and replaced with another firmware that lacked the security features of the authentic firmware, and then executed by the system, restricted or limited access files and private data on the mass storage memory could be copied or tampered with. For example, a user's banking or social security information could be copied or altered without authorization, with obvious negative ramifications. In another example, copyrighted or otherwise protected content could also be copied without authorization. Digital rights management schemes could be thwarted. As another example, cryptographic codes or user passwords could also be compromised.

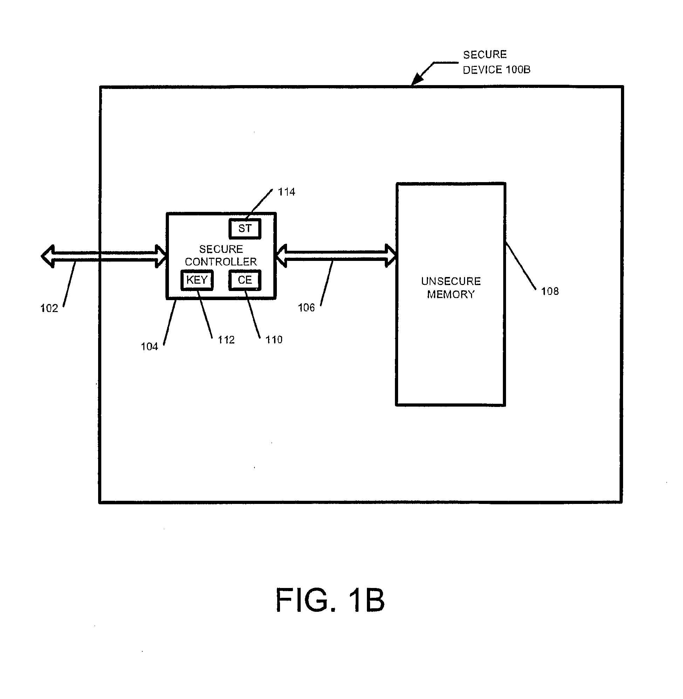

FIG. 1B illustrates secure device 100B. Secure controller 104 comprises cryptographic engine 110, one or more encryption keys 112 stored in a non volatile memory of controller 104, and an indication 114 of the device operating state that is also stored in a non volatile memory of controller 104. In certain embodiments of the Invention, numerous states or life cycle phases are entered and passed through during the life of the card. Depending on the phase, logic in the card enables or disables the encryption engine, controls access to hardware (before and after card assembly) and software testing mechanisms, and controls key generation. These phases not only allow both the hardware and software of the card to be thoroughly tested before and after manufacture, but also make it virtually impossible to access the encrypted keys and thus the encrypted content when the card is in a secure phase, the operating phase that the card is in when it is shipped to the user. For more information on the states or life cycle phases please refer to an application having attorney docket No. SNDK.383US3 "Secure Memory Card With Life Cycle Phases" to Micky Holtzman et al. (published as US 2007/188183). SNDK.383US3 "Secure Memory Card With Life Cycle Phases" to Micky Holtzman et al. (published as US 2007/188183)

The cryptographic engine 110 is hardware based and can encrypt and/or decrypt data as it passes through secure controller 104. For example, data encrypted with a first encryption algorithm as it arrives at the controller from host bus 102 can be decrypted and then encrypted with a second algorithm before it is sent to flash memory 108 via data bus 106. Of course, data encrypted in memory 108 can be decrypted by engine 110 and passed in a decrypted state over host bus 102 although it is preferably in an encrypted format as it passes over host bust 102 so as to avoid potential unauthorized copying of the data.

The cryptographic engine 110, also referred to as encryption engine 110, may comprise numerous sub engines and is capable of utilizing numerous encryption standards and algorithms. Examples of the various encryption techniques and algorithms include: Message Authentication Codes ("MACs"); Data Encryption Standard ("DES"), Triple DES, Advanced Encryption Standard ("AES"), RSA and Diffie-Helman that are often used in a Public Key Infrastructure ("PKI"), and other hash based encryption such as SHA-1 and MD5. The encryption engine may use other currently available algorithms and techniques and others yet to be developed or well accepted, and the aforementioned list is only meant to provide some examples.

A Message Authentication Code is a hash computed from a message and some secret data. It is difficult to forge without knowing the secret data. The MAC is computed using an algorithm based on the DES or AES ciphers, which use a secret key. The secret key 112, or one or more keys derived from the secret key are stored in controller 104, and therefore the hash or message authentication code created by the controller is associated with that controller, and cannot be duplicated by another controller. Therefore hash values from a particular controller are associated with the controller and can act as a type of signature of the controller and device, because the signature is unique and cannot be duplicated.

Although the aforementioned standards and various other algorithms and/or standards are well known to those skilled in cryptography, the following publications are informative and are hereby specifically referred to: *RFC 3566*
- The AES-XCBC-MAC-96 Algorithm and Its Use With IPsec by Sheila Frankel, NIST - National Institute of Standards and Technology, 820 West Diamond Ave, Room 677, Gaithersburg, MD 20899, available at http://www.faqs.org/rfcs/rfc3566.html; Performance Comparison of Message Authentication Code (MAC) Algorithms for the Internet Protocol Security (IPSEC) by Janaka Deepakumara, Howard M. Heys and R. Venkatesan, Electrical and Computer Engineering, Memorial University of Newfoundland, St. John's, NL, Canada, A1B3S7 available at http://www.engr.mun.ca/~howard/PAPERS/necec_2003b.pdf; and Comments to NIST concerting AES Modes of Operations: A Suggestion for Handling Arbitrary-Length Messages with the CBC MAC by John Black, University of Nevada, Reno, Phillip Rogaway, University of California at Davis, available at http://csrc.nist.gov/CryptoToolkit/modes/proposedmodes/xcbc-mac/xcbc-mac-spec.pdf.

FIG. 2 is an illustration of the memory space of the flash memory 108 that includes firmware 200 that runs devices 100A or 100B. The system firmware 200 comprises a boot loader (BLR) portion 200a that resides in flash memory 108 and is preferably not changeable, and system firmware 200b that resides in flash memory 108 and can be changed from time to time if necessary. The size of system firmware 200 is larger than the RAM module it is executed from, so the system firmware is divided into smaller portions referred to as overlays. Each overlay preferably has its own hash value and within system firmware 200 is a table 200c of those hash values. Table 200c is not loaded as part of system firmware 200b, but the pre-stored values are compared with calculated values as will be discussed in more detail below. Any hash value can be used, but MAC or SHA-1 values are currently preferable. Generally, SHA-1 digests may alternatively be used in place of MAC values, and vice versa. The advantage of using MAC values is that they are associated with the hardware and the key of the hardware that created them. While SHA-1 values can be created for a given data set simply based upon the data itself, MAC values cannot be recreated without the key, and thus provide for more robust security. Specifically, because key 104 (or a key derived therefrom) stored in the non volatile memory of encryption engine 110 must be used to create the MAC values, another processor cannot be utilized to recreate the MAC values. For example, a hacker cannot use another processor outside of the system to duplicate the firmware and the associated MAC values.

As a further security precaution, the hash values themselves can be encrypted one or more times. In the example of MAC values, a MAC entry that protects the MAC table 200c2 is created so even if a hacker finds a way to switch or alter the firmware and recalculate the appropriate MACs, he is still facing a problem because he must calculate the MAC of MACs (or MAC of SHA-1s). Furthermore, in one embodiment the MAC of MACs is again encrypted and stored in another (different) memory field, for example the non volatile memory of encryption engine 110 or the controller 104. This multi-level distributed hierarchy ensures that the signatures cannot be forged, or rather, that a forged signature will not be accepted as authentic. As an illustration, if one were to access the flash memory 108 and replace the firmware and table 200c, the system would then check one level up the hierarchy and see if the MAC of table 200c indicates that table 200c has not been tampered with. If the stored MAC of the table does not match the calculated MAC, this indicates a problem with the authenticity. However, if the MAC of table 200c has also been altered to match the replaced table 200c, then the system would verify the signature in error. This error is avoided by storing a copy of the MAC of table 200C in another (inaccessible) memory, and comparing the copy in the other (inaccessible) memory with the value in the flash memory 108. If the values do not match, this indicates an authenticity problem. Although only a few levels were illustrated, this multi-level distributed structure may have numerous levels and incorporate numerous different memories depending on the size and complexity of the firmware to be protected.

This multi-level distributed hierarchy employed in conjunction with the overlay structure of the firmware also results in a very efficient and rapid authentication process. Dividing the firmware into overlays and signing each overlay greatly speeds up the overall authentication process. This is because it is much faster to verify the signature of a smaller amount of code. In order to calculate a hash value, all of the data for which the hash is to be calculated must be read. The larger the portion of firmware to be read, the longer it will take to calculate the signature, and then verify that the signature is authentic. Calculating the signature for a large amount of data is potentially very time consuming and inefficient.

Also stored within the flash memory are various firmware applications 202A...X, shown as APP FW 1, 2 ...X, and, of course, user files (not shown). The firmware applications may be configured differently for various product configurations. The number and type of these applications will vary from one product to another. The firmware applications are also preferably divided into overlays if the applications are larger than the RAM module. A map of the application firmware overlays 201A indicates the location in memory of the various overlays. A table of hash values (SHA-1 digests or MAC values etc...) 201B for the various firmware applications, encrypted with a secret key, which may be secret key 104 or a key derived from secret key 104, is also stored in the flash memory. A firmware application is akin to other applications that run on a base system, e.g. a word processing application in the Windows® environment running on the Windows® operating system.

As discussed in the background, flash memory cells have a limited lifetime and the cells degrade with each read and write operation. Therefore data in the flash memory is generally moved from time to time in order to distribute the read and write operations evenly among the cells and distribute the "wear" evenly amongst the cells. This wear leveling, along with all read/write operations, is controlled by the firmware 200, and in particular by the system firmware 200B. In order to be able to easily move data, the data is logically stored. This means that a logical address is mapped to a physical address, and that while the logical address remains the same, it can be mapped to a different physical address. Again, this logical to physical mapping is carried out by the system firmware.

It presents some difficulty if the firmware is in charge of moving itself. This is especially true when the firmware is responsible for copy protection of the data in the flash memory, and should therefore preferably be verified as authentic before execution. Also, while it is true that the system firmware may be updated from time to time, it will be written very infrequently when compared with other data stored in the flash memory 108. Therefore, the firmware 200, including the boot loader 200a is physically (without logical mapping) written to and read from flash memory 108.

The application firmware provides additional functionality not present in the system firmware, and may be loaded into the device at any time. It is unknown how much application firmware may be loaded into the device, and when each application may be loaded. Therefore space within the physical partition is not allocated and the application firmware is stored in the logical partition 214 and logically addressed like any other user files and data in the flash memory 108.

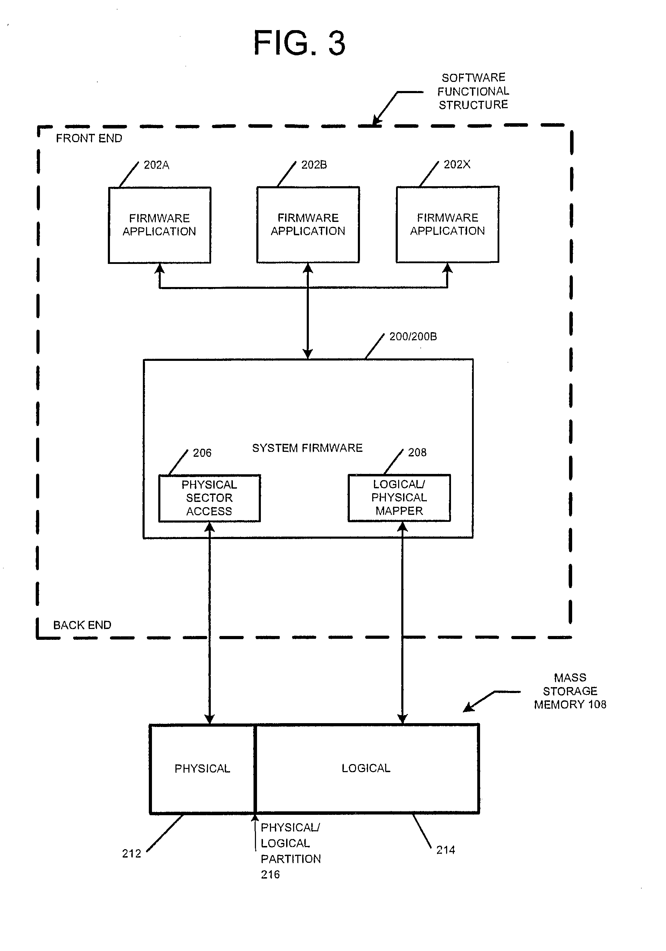

FIG. 3 illustrates the functional structure of the software of the device and how it accesses the mass storage memory 108. As mentioned before, the preferred embodiments comprise flash type memory for mass storage memory 108 and for simplicity, during this description of the preferred embodiments the terms may be used interchangeably. The portion of the software that is concerned with flash memory operations is referred to generally as the back end, while the portion of the software that involves the applications and the user interface is known as the front end. Firmware applications 202A, 202B...202X run on top of firmware. 200 which includes system firmware 200B. Although the BLR 200a is a separate component of firmware 200, the BLR bootstraps the system firmware and may in essence generally be thought of as part of system firmware 200. The system firmware 200 has physical sector address routines or block 206 and logical/physical mapper or mapping routines 208. The mass storage memory 108 is partitioned into physical storage area 212 and logical storage area 214. Physical/logical partition 216 is used to illustrate the division or partitioning of the mass storage memory 108 into areas 212 and 214. Each of areas 212 and 216 can be further partitioned into smaller areas, and it is common in the art to use the term partitions to refer to these smaller areas also. The physical sector access routines or functional block 206 controls reading and writing in the physical area or partition 212, and the logical/physical mapper block controls reading and writing in the logical storage area 214.

Firmware 200, including system firmware 200B, is stored in physical area 212. Application firmware 202A...X is stored in logical area 214 where the user files are also stored. The application firmware and all other data in logical area 214 is moved around from time to time by the wear leveling routines of the system firmware.

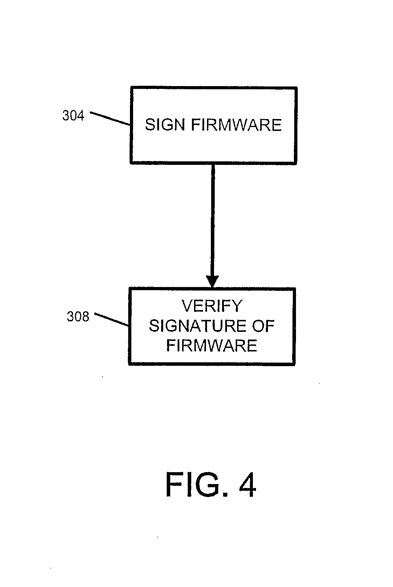

The authenticity of all of the firmware is preferably checked before it is executed. This is done because, as discussed earlier, the mass storage memory 108 does not have its own built in protection mechanisms. The flowchart of FIG. 4 applies to any piece of firmware, including application firmware. In step 304, the firmware is signed. This is typically done at the time of loading of the firmware, but a signed record can be updated by overwriting the record with a new one. The signature comprises one or more hash values of at least a portion of the firmware. The hash values are preferably of the MAC variety, because, as discussed earlier, a MAC value is created with a key used with and/or stored within the controller that created the MAC value, and cannot be recreated by another processor. Each portion or piece of firmware may be signed using a different key. For example, BLR 200A may be signed with a first key, while system firmware 200B is signed with a second key. Various portions (e.g. overlays) of firmware 200 can also be signed with various different keys. As another example, each piece of application firmware 202A...X can be signed with a different key.

Hash values for BLR 200A are stored and calculated in a unique process that is described in copending application entitled "Hardware Driver Integrity Check Of Memory Card Controller Firmware" to Mickey Holtzman et al. having attorney docket number SNDK.408US2 (published as US 2007/0061897). Please refer to that application for further information on that process.

In one preferred embodiment involving the aforementioned life cycle phases or states, the firmware can only be signed in certain states, and unsigned firmware cannot be executed. In particular, in state 150 (not shown), which is the secure operating state that the device will generally be in while in the hands of the consumer, firmware update and signing will not be allowed. This prevents installation of substitute firmware that may not be authentic. The system in that embodiment only enables the encryption engine to sign the firmware in states other than the secure state. In other embodiments, updating of the firmware is allowed in the field (i.e. while in state 150) as long as the firmware is signed before it is loaded and that signature can be verified by the card. The source of the firmware can also be identified and verified, as well as verifying the signature of the firmware itself. The firmware should be supplied by a trusted entity before it is loaded, and in a preferred embodiment the trust is established using a public key infrastructure ("PKI") certificate. This certificate could be in addition to or alternatively in lieu of the hash based signature. For example, if trust is established (by the certificate in this illustrative embodiment) then the encryption engine would sign the firmware. As another added precaution, a secure connection can be established with the supplier of the firmware. The secure connection would be encrypted to protect the data passing between the device and the supplier. The secure connection would preferably be encrypted according to the aforementioned AES standard, but could employ any known encryption standard.

As mentioned previously, the system firmware is broken up into overlays of smaller size so that each overlay can be loaded into RAM for execution. A map 200c1 of the various overlays is stored in the flash memory. Each overlay is individually signed. A table 200c2 of the signatures, which are preferably MAC values, is also stored in the flash memory as part of firmware 200. The system or device 200 allocates sufficient room in the RAM for complete table 200c2 to be loaded, and the entire table is loaded and resident in RAM during operation of the device.

Each firmware application 202A...X is also broken up into overlays, and each overlay is likewise signed. Currently, as with the system firmware, it is preferable to calculate key dependent hash (e.g. MAC) values to sign the firmware applications, although as mentioned previously, other hash values may be used. Table 201B contains the signatures for each application firmware overlay in map 201A. A one sector buffer is pre-allocated in the RAM as a workspace for the application firmware signatures.

Although it is preferable to sign each overlay of any of the firmware because this prevents replacement of a piece of firmware that may have critical decision making functionality, any amount of firmware can rely on one signature. For example, although not preferred, one signature could be used for all the firmware. Furthermore, the size of the overlays or portions to be signed may also vary. Referring again to FIG. 4, after the firmware is signed in step 304 as described above, each signature is verified in step 308. When each piece, e.g. each overlay, of the firmware is read from the flash memory, it passes through the encryption engine 110, and the hash value of the piece is created "on the fly" by the encryption engine. This calculated value is compared to the stored value, and if the values do not match there is a problem with the authenticity of the piece of the firmware. If there is a match, then the next level of the hierarchical structure described earlier with regard to FIG. 2 will preferably be checked. Preferably all the levels will be checked as will the copy stored in the additional memory. As mentioned previously, this distributed hierarchical structure assures that the firmware and signature are authentic.

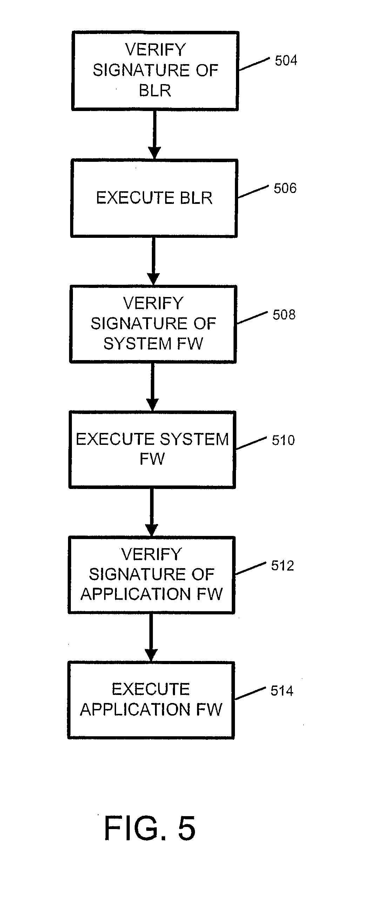

FIG. 5 is a flowchart illustrating firmware execution. In step 504, the system verifies the signature of the boot loader portion ("BLR"). This can be done as mentioned above in regard to the system firmware, but is preferably done in another process described in a co-pending application entitled "Hardware Driver Integrity Check of Memory Card Controller Firmware" to Micky Holtzman et al. with attorney docket No. SNDK.408US2 (published as US 2007/0061897). After the signature of the BLR has been verified it is executed in step 506. Next in step 508 the system verifies the signature of the system firmware. It then executes it in step 510. If any application firmware is present, its signature is verified in step 512 and then once verified it is executed in step 514. This is done for each piece of application firmware. As mentioned above, any of the verification steps 506, 508, and 510 are preferably done for each overlay of the entity being verified before or as it is loaded into the RAM.

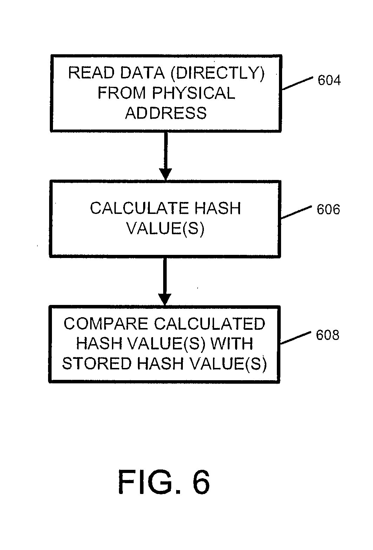

FIG. 6 is a flowchart illustrating the reading and verification of firmware 200, which is stored in the physical storage area 212. This corresponds to steps 504 and 508 of FIG. 5. In step 604 the data (firmware in this case) is read from the physical address where it is stored. Again, this physical read is performed without any logical mapping beforehand. Next, in step 604, hash value(s) are created for the firmware. These value(s) are temporarily stored in a register of the controller. Next in step 608 the value(s) calculated in step 606 are compared with the stored hash value(s). In the embodiments described, the stored value(s) are in tables in the flash memory, and may themselves be encrypted.

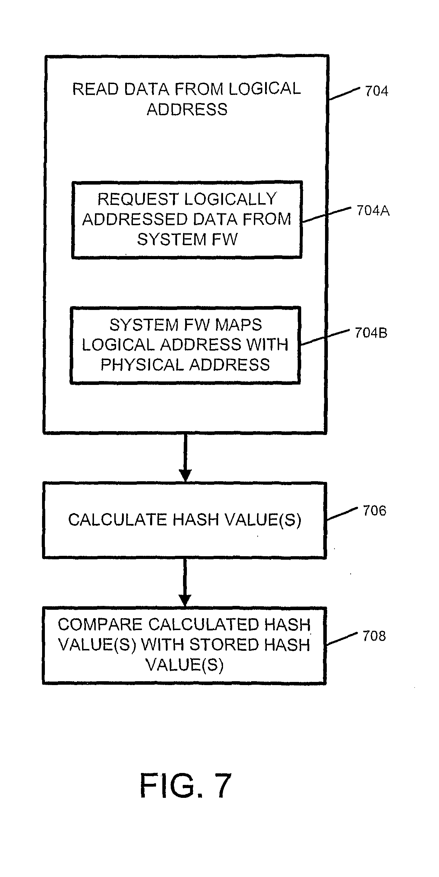

FIG. 7 is a flowchart illustrating the reading and verification of the firmware applications 202A...X. In step 704 the data is read from the logical address where it is stored. This comprises requesting logically addressed data from the system firmware in step 704A. It also comprises step 704B where the system firmware then maps the logical address with its corresponding physical address at that given time. After the data (firmware in this case) is read, hash values are calculated for the overlay or other quantity of firmware in step 706. Then in step 708 the calculated has value(s) are compared with the stored hash value(s). Again, in the embodiments described the stored hash values are in tables in the flash memory and may themselves be encrypted.

Although the various aspects of the present invention have been described with respect to exemplary embodiments thereof, it will be understood that the present invention is entitled to protection within the full scope of the appended claims.

## Claims

1. A method of operating a mass storage device (100A), comprising:
providing a non-secure flash memory (108) for the mass storage of content and software;
providing a secure controller (104) that manages operations of the device (100A) and comprises a hardware based cryptographic engine (110) for encrypting and/or decrypting data as it passes through the secure controller (104);
wherein firmware (200, 200a, 200b, 202A-202X) signed with a secret key stored in the secure controller or one or more keys derived from a secret key stored in the secure controller is stored within the flash memory (108);
wherein the firmware (200, 200a, 200b, 202A-202X) comprises a first level (200, 200a, 200b) stored in a physical access partition (212) of the flash memory and a second level (202A, 202B) stored in a logical access partition (214) of the flash memory;
wherein the first level of firmware (200, 200a, 200b) comprises boot loader firmware (200a);
the firmware is executed from RAM, wherein the size of the firmware (200, 200a, 200b, 202A-202X) is larger than the size of the RAM;
wherein the second level of firmware (202A-202X) is divided into a plurality of overlays, each overlay comprising a different portion of the second level of firmware (202A-202X);
wherein each of the plurality of overlays of the second level of firmware is signed with a different key;
reading the firmware (200, 200a, 200b, 202A-202X) stored in the flash memory (108);
prior to execution of the first and second levels of the firmware (200, 200a, 200b, 202A-202X), verifying the signatures of the respective first and second levels of the firmware (200, 200a, 200b, 202A-202X) using the cryptographic engine (110) as the firmware is read from the flash memory (108) and passes through the encryption engine (110);
wherein verifying the one or more signatures comprises the secure controller (104) generating a signature for the firmware (200, 200a, 200b, 202A-202X) read from the flash memory (108) and comparing the generated signature with the signature stored in the flash memory (108).

2. The method of claim 1, wherein the second level of firmware (202A-202X) comprises application firmware.

3. A method according to claim 1 or 2, further comprising writing the firmware (200, 200a, 200b, 202A-202X) with the secure controller (104) of the device, wherein writing the firmware comprises signing the firmware (200, 200a, 200b, 202A-202X) with the secure controller (104) by generating a hash value for the firmware (200, 200a, 200b, 202A-202X) and storing the hash value in a table in the flash memory (108).

4. A method according to claim 3, wherein the hash value comprises one of a MAC value and an SHA-1 value.

5. A method according to claim 3, further comprising encrypting the hash value prior to storing the hash value in the table.

6. A method according to claim 2, wherein the steps of reading the firmware (200, 200a, 200b, 202A-202X) and verifying authenticity of the firmware as it is read comprises:
reading the system firmware (200B) from the physical partition (212) of the flash memory (108);
verifying authenticity of the system firmware (200B); and
if the system firmware (200B) is verified as authentic, subsequently reading the application firmware (202A-202X) from the logical partition (214) of the flash memory and verifying the authenticity of the application firmware (202A-202X).

7. A method according to claim 6, further comprising controlling a logical to physical mapping of the application firmware (202A-202X) in the flash memory with the system firmware (200B).

8. A secure system comprising:
a non-secure flash mass storage memory (108);
a secure controller (104) operable to read firmware (200, 200a, 200b, 202A-202X) stored in the non-secure mass storage memory (108), the secure controller (104) comprising a hardware based cryptographic engine (110) for encrypting and/or decrypting data as it passes through the secure controller (104);
wherein the firmware (200, 200a, 200b, 202A-202X) is signed with a secret key stored in the secure controller or one or more keys derived from a secret key stored in the secure controller;
wherein the firmware (200, 200a, 200b, 202A-202X) comprises a first level (200, 200a, 200b) stored in a physical access partition (212) of the flash memory and a second level (202A, 202B) stored in a logical access partition (214) of the flash memory;
wherein the first level of firmware (200, 200a, 200b) comprises boot loader firmware (200a);
the firmware is executed from RAM, wherein the size of the firmware (200, 200a, 200b, 202A-202X) is larger than the size of the RAM;
wherein the second level of firmware (202A-202X) is divided into a plurality of overlays, each overlay comprising a different portion of the second level of firmware (202A-202X);
wherein each of the plurality of overlays of the second level of firmware is signed with a different key;
wherein the controller (104) is operable to, prior to execution of the first and second levels of the firmware (200, 200a, 200b, 202A-202X), verify authenticity of the first and second levels of the firmware (200, 200a, 200b, 202A-202X) as they are read from the non-secure mass storage memory (108) by generating a signature for the respective first and second levels of the firmware (200, 200a, 200b, 202A-202X) read from the non-secure mass storage memory (108) using the cryptographic engine (110) as the firmware passes through the encryption engine (110) and comparing the generated signature with the signature stored in the non-secure mass storage memory (108).

9. A secure system according to claim 8, wherein the first level (200B) is system firmware and the second level (202A-202X) is application firmware.

10. The secure system according to claim 9, wherein the controller (104) is operable to read and verify authenticity of the firmware (200, 200a, 200b, 202A-202X) as it is read by:
reading the system firmware (200B) from the physical partition (212) of the non-secure mass storage memory (108);
verifying authenticity of the system firmware (200B); and
if the system firmware (200B) is verified as authentic, subsequently reading the application firmware (202A-202X) from the logical partition (214) of the non-secure mass storage memory (108) and verifying the authenticity of the application firmware (202A-202X).

## Patentansprüche

1. Verfahren zum Betreiben einer Massenspeichervorrichtung (100A), umfassend:
Bereitstellen eines nicht sicheren Flash-Speichers (108) für die Massenspeicherung von Inhalt und Software;
Bereitstellen eines sicheren Controllers (104), der Betriebsvorgänge der Vorrichtung (100A) verwaltet und eine hardwaregestützte Kryptografie-Engine (110) zum Verschlüsseln und/oder Entschlüsseln von Daten, während sie den sicheren Controller (104) durchlaufen, umfasst;
worin Firmware (200, 200a, 200b, 202A-202X), die mit einem im sicheren Controller gespeicherten Geheimschlüssel oder mit einem oder mehreren Schlüsseln, die aus einem im sicheren Controller gespeicherten Geheimschlüssel abgeleitet sind, signiert ist, innerhalb des Flash-Speichers (108) gespeichert ist;
worin die Firmware (200, 200a, 200b, 202A-202X) eine erste Ebene (200, 200a, 200b), die in einer physischen Zugriffspartition (212) des Flash-Speichers gespeichert ist, und eine zweite Ebene (202A, 202B), die in einer logischen Zugriffspartition (214) des Flash-Speichers gespeichert ist, umfasst;
worin die erste Ebene der Firmware (200, 200a, 200b) Urlader-Firmware (200a) umfasst;
wobei die Firmware aus dem RAM ausgeführt wird, worin die Größe der Firmware (200, 200a, 200b, 202A-202X) größer als die Größe des RAM ist;
worin die zweite Ebene der Firmware (202A-202X) in eine Vielzahl von Überlagerungen geteilt ist, wobei jede Überlagerung einen anderen Abschnitt der zweiten Ebene der Firmware (202A-202X) umfasst;
worin jede aus der Vielzahl von Überlagerungen der zweiten Ebene der Firmware mit einem anderen Schlüssel signiert ist;
Lesen der im Flash-Speicher (108) gespeicherten Firmware (200, 200a, 200b, 202A-202X);
vor der Ausführung der ersten und zweiten Ebene der Firmware (200, 200a, 200b, 202A-202X) erfolgendes Verifizieren der Signaturen der jeweiligen ersten und zweiten Ebene der Firmware (200, 200a, 200b, 202A-202X) unter Verwendung der Kryptografie-Engine (110), wenn die Firmware aus dem Flash-Speicher (108) gelesen wird und die Codier-Engine (110) durchläuft;
worin das Verifizieren der einen oder mehreren Signaturen umfasst: durch den sicheren Controller (104) erfolgendes Erzeugen einer Signatur für die aus dem Flash-Speicher (108) gelesene Firmware (200, 200a, 200b, 202A-202X) und Vergleichen der erzeugten Signatur mit der im Flash-Speicher (108) gespeicherten Signatur.

2. Verfahren nach Anspruch 1, worin die zweite Ebene der Firmware (202A-202X) Anwendungsfirmware umfasst.

3. Verfahren nach Anspruch 1 oder 2, ferner umfassend: Schreiben der Firmware (200, 200a, 200b, 202A-202X) mit dem sicheren Controller (104) der Vorrichtung, worin das Schreiben der Firmware umfasst: Signieren der Firmware (200, 200a, 200b, 202A-202X) mit dem sicheren Controller (104) durch Erzeugen eines Hash-Werts für die Firmware (200, 200a, 200b, 202A-202X) und Speichern des Hash-Werts in einer Tabelle im Flash-Speicher (108).

4. Verfahren nach Anspruch 3, worin der Hash-Wert eines von Folgendem umfasst: ein MAC-Wert und ein SHA-1-Wert.

5. Verfahren nach Anspruch 3, ferner umfassend: Verschlüsseln des Hash-Werts vor dem Speichern des Hash-Werts in der Tabelle.

6. Verfahren nach Anspruch 2, worin die Schritte des Lesens der Firmware (200, 200a, 200b, 202A-202X) und Verifizierens der Authentizität der Firmware, während sie gelesen wird, umfassen:
Lesen der Systemfirmware (200B) von der physischen Partition (212) des Flash-Speichers (108);
Verifizieren der Authentizität der Systemfirmware (200B); und
wenn die Systemfirmware (200B) als authentisch verifiziert wird, anschließendes Lesen der Anwendungsfirmware (202A-202X) von der logischen Partition (214) des Flash-Speichers und Verifizieren der Authentizität der Anwendungsfirmware (202A-202X).

7. Verfahren nach Anspruch 6, ferner umfassend: Steuern einer Logisch-zuphysisch-Zuordnung der Anwendungsfirmware (202A-202X) im Flash-Speicher mit der Systemfirmware (200B).

8. Sicheres System, umfassend:
einen nicht sicheren Flash-Massenspeicher (108);
einen sicheren Controller (104), der betriebsfähig ist, Firmware (200, 200a, 200b, 202A-202X) zu lesen, die in dem nicht sicheren Flash-Massenspeicher (108) gespeichert ist, wobei der sichere Controller (104) eine hardwaregestützte Kryptografie-Engine (110) zum Verschlüsseln und/oder Entschlüsseln von Daten, während sie den sicheren Controller (104) durchlaufen, umfasst;
worin die Firmware (200, 200a, 200b, 202A-202X) mit einem im sicheren Controller gespeicherten Geheimschlüssel oder mit einem oder mehreren Schlüsseln, die aus mit einem im sicheren Controller gespeicherten Geheimschlüssel abgeleitet sind, signiert ist;
worin die Firmware (200, 200a, 200b, 202A-202X) eine erste Ebene (200, 200a, 200b), die in einer physischen Zugriffspartition (212) des Flash-Speichers gespeichert ist, und eine zweite Ebene (202A, 202B), die in einer logischen Zugriffspartition (214) des Flash-Speichers gespeichert ist, umfasst;
worin die erste Ebene der Firmware (200, 200a, 200b) Urlader-Firmware (200a) umfasst;
wobei die Firmware aus dem RAM ausgeführt wird, worin die Größe der Firmware (200, 200a, 200b, 202A-202X) größer als die Größe des RAM ist;
worin die zweite Ebene der Firmware (202A-202X) in eine Vielzahl von Überlagerungen geteilt ist, wobei jede Überlagerung einen anderen Abschnitt der zweiten Ebene der Firmware (202A-202X) umfasst;
worin jede aus der Vielzahl von Überlagerungen der zweiten Ebene der Firmware mit einem anderen Schlüssel signiert ist;
worin der Controller (104) betriebsfähig ist, vor der Ausführung der ersten und zweiten Ebene der Firmware (200, 200a, 200b, 202A-202X) die Authentizität der ersten und zweiten Ebene der Firmware (200, 200a, 200b, 202A-202X) zu verifizieren, während sie aus dem nicht sicheren Flash-Massenspeicher (108) gelesen werden, indem unter Verwendung der Kryptografie-Engine (110) für die jeweilige aus dem nicht sicheren Flash-Massenspeicher (108) gelesene erste und zweite Ebene der Firmware (200, 200a, 200b, 202A-202X) eine Signatur erzeugt wird, während die Firmware die Codier-Engine (110) durchläuft, und die erzeugte Signatur mit der im nicht sicheren Speicher (108) gespeicherten Signatur verglichen wird.

9. Sicheres System nach Anspruch 8, worin die erste Ebene (200B) Systemfirmware ist und die zweite Ebene (202A-202X) Anwendungsfirmware ist.

10. Sicheres System nach Anspruch 9, worin Controller (104) betriebsfähig ist, die Firmware (200, 200a, 200b, 202A-202X) zu lesen und ihre Authentizität zu verifizieren, während sie gelesen wird, und zwar durch:
Lesen der Systemfirmware (200B) von der physischen Partition (212) des nicht sicheren Flash-Massenspeichers (108);
Verifizieren der Authentizität der Systemfirmware (200B); und
wenn die Systemfirmware (200B) als authentisch verifiziert wird, anschließendes Lesen der Anwendungsfirmware (202A-202X) von der logischen Partition (214) des nicht sicheren Flash-Massenspeichers (108) und Verifizieren der Authentizität der Anwendungsfirmware (202A-202X).

## Revendications

1. Procédé d'utilisation d'un dispositif de stockage de grande capacité (100A), comprenant les étapes consistant à :
fournir une mémoire flash non protégée (108) pour le stockage de grande capacité de contenus et de logiciels ;
fournir un dispositif de commande protégé (104) qui gère des opérations du dispositif (100A) et comprend un moteur cryptographique (110) à base matérielle permettant de crypter et/ou de décrypter des données à mesure qu'elles passent par le dispositif de commande protégé (104) ;
dans lequel un micrologiciel (200, 200a, 200b, 202A à 202X) signé avec une clé secrète stockée dans le dispositif de commande protégé ou une ou plusieurs clés dérivées d'une clé secrète stockée dans le dispositif de commande protégé est stocké au sein de la mémoire flash (108) ;
dans lequel le micrologiciel (200, 200a, 200b, 202A à 202X) comprend un premier niveau (200, 200a, 200b) stocké dans une partition d'accès physique (212) de la mémoire flash et un second niveau (202A, 202B) stocké dans une partition d'accès logique (214) de la mémoire flash ;
dans lequel le premier niveau de micrologiciel (200, 200a, 200b) comprend un micrologiciel formant chargeur d'amorçage (200a) ;
le micrologiciel est exécuté à partir d'une RAM, la taille du micrologiciel (200, 200a, 200b, 202A à 202X) étant supérieure à la taille de la RAM ;
dans lequel le second niveau de micrologiciel (202A à 202X) est divisé en une pluralité de recouvrements, chaque recouvrement comprenant une partie différente du second niveau de micrologiciel (202A à 202X) ;
dans lequel chaque recouvrement parmi la pluralité de recouvrements du second niveau de micro logiciel est signé avec une clé différente ;
lire le micrologiciel (200, 200a, 200b, 202A à 202X) stocké dans la mémoire flash (108) ;
préalablement à l'exécution des premier et second niveaux du micrologiciel (200, 200a, 200b, 202A à 202X), vérifier les signatures des premier et second niveaux respectifs du micrologiciel (200, 200a, 200b, 202A à 202X) en utilisant le moteur cryptographique (110) à mesure que le micrologiciel est lu à partir de la mémoire flash (108) et passe par le moteur de cryptage (110) ;
dans lequel l'étape de vérification des une ou plusieurs signatures comprend des étapes, assurées par le dispositif de commande protégé (104), de génération d'une signature pour le micrologiciel (200, 200a, 200b, 202A à 202X) lu à partir de la mémoire flash (108) et de comparaison de la signature générée avec la signature stockée dans la mémoire flash (108).

2. Procédé selon la revendication 1, dans lequel le second niveau de micrologiciel (202A à 202X) comprend un micro logiciel d'application.

3. Procédé selon la revendication 1 ou 2, comprenant en outre une étape consistant à écrire le micrologiciel (200, 200a, 200b, 202A à 202X) avec le dispositif de commande protégé (104) du dispositif, dans lequel l'étape d'écriture du micrologiciel comprend une étape consistant à signer le micrologiciel (200, 200a, 200b, 202A à 202X) avec le dispositif de commande protégé (104) en générant une valeur de hachage pour le micrologiciel (200, 200a, 200b, 202A à 202X) et en stockant la valeur de hachage dans une table de la mémoire flash (108).

4. Procédé selon la revendication 3, dans lequel la valeur de hachage comprend une valeur parmi une valeur MAC et une valeur SHA-1.

5. Procédé selon la revendication 3, comprenant en outre une étape consistant à crypter la valeur de hachage préalablement au stockage de la valeur de hachage dans la table.

6. Procédé selon la revendication 2, dans lequel les étapes de lecture du micrologiciel (200, 200a, 200b, 202A à 202X) et de vérification de l'authenticité du micrologiciel à mesure qu'il est lu comprennent les étapes consistant à :
lire le micrologiciel système (200B) à partir de la partition physique (212) de la mémoire flash (108) ;
vérifier l'authenticité du micrologiciel système (200B) ; et
si le micrologiciel système (200B) est vérifié comme étant authentique, lire ensuite le micrologiciel d'application (202A à 202X) à partir de la partition logique (214) de la mémoire flash et vérifier l'authenticité du micrologiciel d'application (202A à 202X).

7. Procédé selon la revendication 6, comprenant en outre une étape consistant à commander un mappage logique/physique du micrologiciel d'application (202A à 202X) dans la mémoire flash avec le micrologiciel système (200B).

8. Système protégé comprenant :
une mémoire flash de stockage de grande capacité non protégée (108) ;
un dispositif de commande protégé (104) pouvant être utilisé pour lire un micrologiciel (200, 200a, 200b, 202A à 202X) stocké dans la mémoire de stockage de grande capacité non protégée (108), le dispositif de commande protégé (104) comprenant un moteur cryptographique (110) à base matérielle et permettant de crypter et/ou décrypter des données à mesure qu'elles passent par le dispositif de commande protégé (104) ;
dans lequel le micrologiciel (200, 200a, 200b, 202A à 202X) est signé avec une clé secrète stockée dans le dispositif de commande protégé ou une ou plusieurs clés dérivées d'une clé secrète stockée dans le dispositif de commande protégé ;
dans lequel le micrologiciel (200, 200a, 200b, 202A à 202X) comprend un premier niveau (200, 200a, 200b) stocké dans une partition d'accès physique (212) de la mémoire flash et un second niveau (202A, 202B) stocké dans une partition d'accès logique (214) de la mémoire flash ;
dans lequel le premier niveau de micrologiciel (200, 200a, 200b) comprend un micrologiciel formant chargeur d'amorçage (200a) ;
le micrologiciel est exécuté à partir d'une RAM, la taille du micrologiciel (200, 200a, 200b, 202A à 202X) étant supérieure à la taille de la RAM ;
dans lequel le second niveau de micrologiciel (202A à 202X) est divisé en une pluralité de recouvrements, chaque recouvrement comprenant une partie différente du second niveau de micrologiciel (202A à 202X) ;
dans lequel chaque recouvrement parmi la pluralité de recouvrements du second niveau de micrologiciel est signé avec une clé différente ;
dans lequel le dispositif de commande (104) peut être utilisé pour, préalablement à une exécution des premier et second niveaux du micrologiciel (200, 200a, 200b, 202A à 202X), vérifier une authenticité des premier et second niveaux du micrologiciel (200, 200a, 200b, 202A à 202X) à mesure qu'ils sont lus à partir de la mémoire de stockage de grande capacité non protégée (108) en générant une signature pour les premier et second niveaux respectifs du micrologiciel (200, 200a, 200b, 202A à 202X) lu à partir de la mémoire de stockage de grande capacité non protégée (108) à l'aide du moteur cryptographique (110) à mesure que le micrologiciel passe par le moteur de cryptage (110) et en comparant la signature générée avec la signature stockée dans la mémoire de stockage de grande capacité non protégée (108).

9. Système protégé selon la revendication 8, dans lequel le premier niveau (200B) est un micrologiciel système et le second niveau (202A à 202X) est un micrologiciel d'application.

10. Système protégé selon la revendication 9, dans lequel le dispositif de commande (104) peut être utilisé pour lire et vérifier l'authenticité du micrologiciel (200, 200a, 200b, 202A à 202X) à mesure qu'il est lu, grâce aux étapes consistant à :
lire le micrologiciel système (200B) à partir de la partition physique (212) de la mémoire de stockage de grande capacité non protégée (108) ;
vérifier l'authenticité du micrologiciel système (200B) ; et
si le micrologiciel système (200B) est vérifié comme étant authentique, lire ensuite le micrologiciel d'application (202A à 202X) à partir de la partition logique (214) de la mémoire de stockage de grande capacité non protégée (108) et vérifier l'authenticité du micrologiciel d'application (202A à 202X).
